(19) Europäisches Patentamt / European Patent Office / Office européen des brevets

(11) **EP 1 689 108 B1**

(12) **EUROPEAN PATENT SPECIFICATION**

(45) Date of publication and mention
of the grant of the patent:
**20.06.2012 Bulletin 2012/25**

(51) Int Cl.:
*H04L 1/06* (2006.01)      *H04B 7/04* (2006.01)
*H04B 7/06* (2006.01)

(21) Application number: **06002179.7**

(22) Date of filing: **02.02.2006**

(54) **Transmission apparatus and method for MIMO system**

Vorrichtung und Verfahren zur Datenübertragung für ein MIMO-System

Appareil de transmission et méthode pour système MIMO

(84) Designated Contracting States:
**DE FR GB IT SE**

(30) Priority: **02.02.2005 KR 2005009561**

(43) Date of publication of application:
**09.08.2006 Bulletin 2006/32**

(73) Proprietor: **Samsung Electronics Co., Ltd.**
**Suwon-si, Gyeonggi-do (KR)**

(72) Inventors:
• **Nam, Seung-Hoon**
  **Yeongtong-gu**
  **Suwon-si**
  **Gyeonggi-do (KR)**
• **Hwang, Chan-Soo**
  **Yeongtong-gu**
  **Suwon-si**
  **Gyeonggi-do (KR)**
• **Chung, Jae-Hak**
  **Yeongtong-gu**
  **Suwon-si**
  **Gyeonggi-do (KR)**
• **Jung, Young-Ho**
  **Yeongtong-gu**
  **Suwon-si**
  **Gyeonggi-do (KR)**
• **Roh, Won-Il**
  **Yeongtong-gu**
  **Suwon-si**
  **Gyeonggi-do (KR)**
• **Chae, Chan, Byoung**
  **Yeongtong-gu**
  **Suwon-si**
  **Gyeonggi-do (KR)**

(74) Representative: **Grünecker, Kinkeldey,**
**Stockmair & Schwanhäusser**
**Leopoldstrasse 4**
**80802 München (DE)**

(56) References cited:
**EP-A- 0 929 161          WO-A-03/058905**
**WO-A-2004/002010    WO-A-2005/006696**
**US-B1- 6 510 173**

**Description**

The present invention relates generally to a wireless communication system, and in particular, to a transmission scheme for a Multiple Input Multiple Output (MIMO) communication system.

In a MIMO communication system that transmits/receives data using a plurality of transmission antennas and reception antennas, a MIMO channel formed by the transmission and reception antennas is disassembled into a plurality of independent spatial channels. Each of the spatial channels is mapped to one dimension, and the use of additional dimensions created by the multiple transmission and reception antennas improves performance of the MIMO system.

In a wireless communication system, transmission data forms a symbol stream through a coding and modulation process, and the symbol stream is phase-shifted into a radio frequency (RF) modulated signal that is suitable to be transmitted over a wireless channel.

A data transmission scheme using the MIMO system is classified into a Spatial Multiplexing (SM) scheme and a Spatial Diversity (SD) scheme. The SM scheme simultaneously transmits different data using multiple transmission antennas, thereby transmitting data at a high rate without increasing a bandwidth of the system. The SD scheme transmits a single data stream via multiple transmission antennas, thereby obtaining transmit diversity gain.

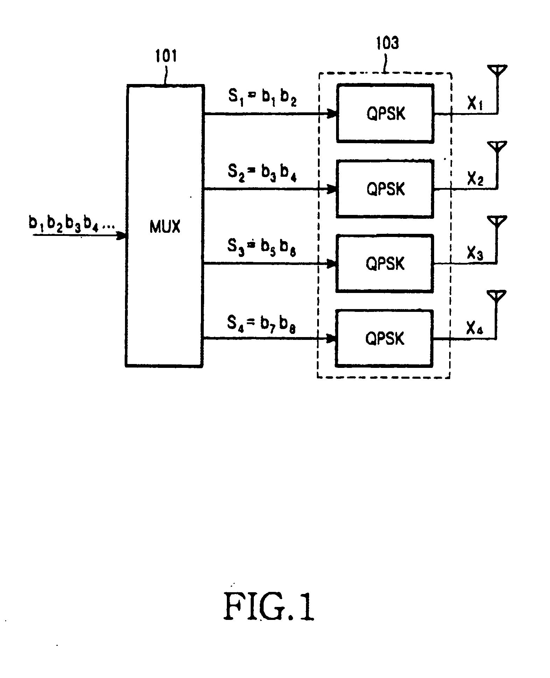

FIG. 1 is a block diagram illustrating a structure of a transmitter based on a Bell Labs Layered Space-Time (BLAST) scheme, which is the conventional SM scheme. An input bit stream is multiplexed into four parallel bit streams $S_1$, $S_2$, $S_3$ and $S_4$ by a multiplexer (MUX) 101. The individual bit streams $S_1$, $S_2$, $S_3$ and $S_4$ are modulated into modulation symbols $X_1$, $X_2$, $X_3$ and $X_4$ according to a modulation technique of their associated modulators 103, and then transmitted through four associated transmission antennas. In this case, the modulation technique is a quadrature phase shift keying (QPSK) scheme. In the BLAST scheme, multiplexing gain is in proportion to the number of transmission antennas and reception antennas. However, the BLAST scheme, as it provides no diversity gain, there is a decrease in bit error rate (BER) performance in a high signal-to-noise ratio (SNR) environment, and it suffers an abrupt change in performance depending on the type of receiver and transmission optimization technique.

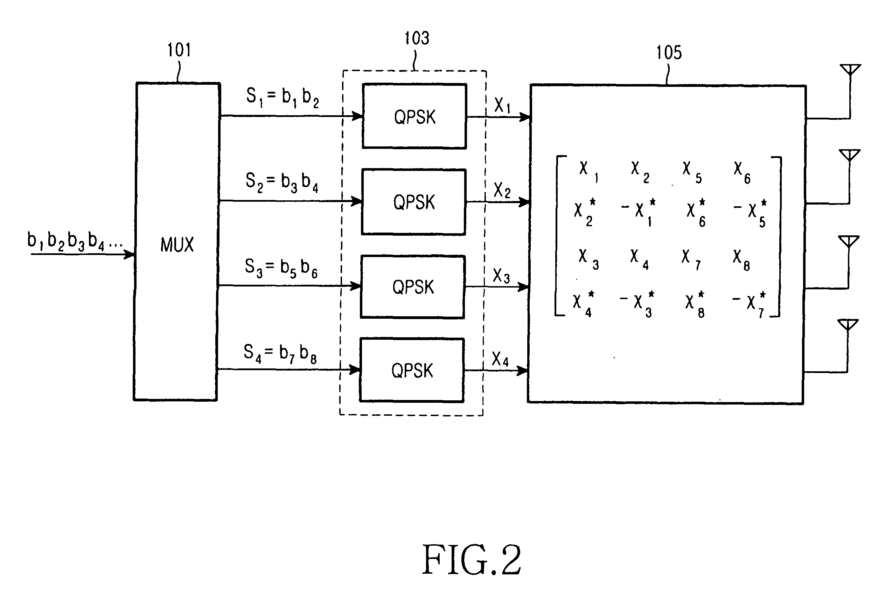

FIG. 2 is a block diagram illustrating a structure of a transmitter based on a Double Space-Time Transmit Diversity (DSTTD) scheme, which is the conventional SD scheme. Modulation symbols $X_1$, $X_2$, $X_3$ and $X_4$ modulated through the process of FIG 1 are pre-coded by a transmission matrix of a pre-encoder 105 before being transmitted. The transmission matrix has a form defined by Equation (1):

$$B = \begin{bmatrix} x_1 & x_2 & x_5 & x_6 \\ x_2^* & -x_1^* & x_6^* & -x_5^* \\ x_3 & x_4 & x_7 & x_8 \\ x_4^* & -x_3^* & x_8^* & -x_7^* \end{bmatrix} \quad \dots\dots\dots (1)$$

The DSTTD scheme using the 4x4 transmission matrix shown in Equation 1 has both a multiplexing gain of 2 and a diversity gain of 2, thus contributing to performance improvement, but results in a decrease in data rate due to the reduction in the multiplexing gain.

For improvement in system performance, the MIMO system has recently been designed so as to support at least one of the SM techniques and the SD techniques. In this scheme, a particular transmission technique is selected in a given time period according to channel conditions and required results.

However, because a transmission technique for spatial multiplexing and a transmission technique for spatial diversity are different from each other in design, supporting both of the transmission techniques for spatial multiplexing and spatial diversity within one system causes an increase in complexity of transceivers.

The present invention is provided to substantially solve at least the above problems and/or disadvantages.

US-B1-6 510 173 discloses a method of orthogonal receive-transmit diversity in CDMA communication systems wherein, on the transmitting side, a spreading code is assigned to each information stream of binary symbols of each user. Each information binary symbol stream is divided into serial information packets each comprising N serial binary symbols. A serial to parallel transformation of binary symbols of a serial information packet is executed forming a parallel information packet comprising four binary symbols. The parallel information packet is repeated four times to form a serial-parallel information packet of four parallel and four serial groups of binary symbols. Each parallel group contains all the symbols of serial information packet. Each serial group comprises four similar binary symbols. The binary symbols in the parallel groups of the serial-parallel information packet are reordered so that the binary symbols of each serial group are not repeated. Thus, each serial group contains a set of all the symbols of the serial information packet but in a different combination.

WO 03/058905 A discloses a data transmission and reception method and apparatus using multiple-input multiple-output modulation. Multiple outputs of a MIMO modulator are coupled to orthogonal frequency division multiplex modulators. The MIMO modulator will receive a plurality of inputs and processes these multiple inputs. Encoded bits are interleaved across the transmission resources and mapped, if desired, to symbols for transmission. These data stream elements are interleaved over the transmitters and the sub-carriers that comprise the channel.

WO 2005/006696 A discloses an apparatus and method for providing a multicarrier transmission scheme using diversity techniques. A divider divides the input signal into a number of divided signals. Coders are formed to separately code the divided signals for obtaining the number of sub signals. Each of the coders has an output coupled to an assigner in parallel. The assigner has a number of outputs coupled to a transformer that is coupled to a multiplying point. At the multiplying point, the signal path is divided into a number of paths, wherein the number of paths corresponds to the number of transmit antennas.

It is, therefore, the object of the present invention to provide a transmission apparatus and method for improving multiplexing gain while maintaining the diversity gain available in the conventional spatial diversity technique, through a simple coding process.

This object is solved by the subject matter of the independent claims.

Preferred embodiments are defined in the dependent claims.

It is an aspect of the present invention to provide a transmission apparatus and method for adjusting diversity gain through modification of a bit/symbol mapping pattern.

It is another aspect of the present invention to provide a transmission apparatus and method for improving multiplexing gain and adjusting diversity gain without increasing complexity of a decoder.

It is still another aspect of the present invention to provide a transmission apparatus and method for maximizing system performance by adjusting multiplexing gain and diversity gain according to environment, without increasing complexity.

The present invention will become more apparent from the following detailed description when taken in conjunction with the accompanying drawings in which:

FIG. 1 is a block diagram illustrating a structure of a transmitter based on a Bell Labs Layered Space-Time (BLAST) scheme which is the conventional spatial multiplexing scheme;
FIG. 2 is a block diagram illustrating a structure of a transmitter based on a Double Space-Time Transmit Diversity (DSTTD) scheme which is the conventional spatial diversity scheme; and
FIG 3 is a block diagram illustrating a structure of a Multiple Input Multiple Output (MIMO) transmitter according to an embodiment of the present invention.

A MIMO transmission apparatus and method according to the present invention will now be described with reference to the accompanying drawing.

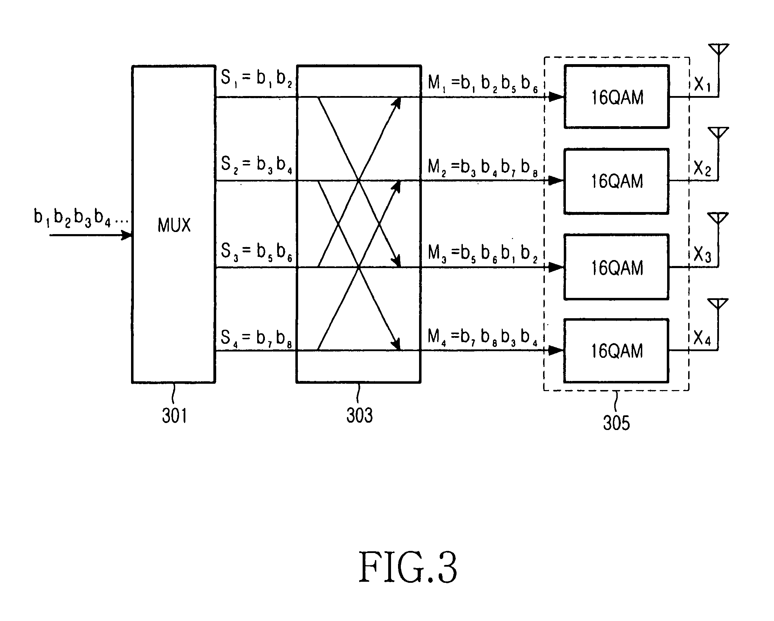

FIG. 3 is a block diagram illustrating a structure of a MIMO transmission apparatus according to the present invention. As illustrated in FIG. 3, a MIMO transmission apparatus according to the present invention includes a multiplexer 301 for multiplexing input bits $b_1$, $b_2$, $b_3$, $b_4$, ⋯ into a plurality of parallel symbol streams $S_1$, $S_2$, $S_3$, and $S_4$, a bit/symbol mapper 303 for mapping bits constituting the parallel symbol streams into a plurality of mapped bit streams $M_1$, $M_2$, $M_3$, and $M_4$, and a plurality of modulation modules 305 for modulating the mapped bit streams $M_1$, $M_2$, $M_3$, and $M_4$ into transmission symbols $X_1$, $X_2$, $X_3$ and $X_4$ using a predetermined modulation technique and transmitting the transmission symbols $X_1$, $X_2$, $X_3$ and $X_4$ via their associated transmission antennas. The transmission symbols $X_1$, $X_2$, $X_3$ and $X_4$ may be pre-coded through a transmission matrix before being transmitted. Preferably, the modulation technique utilized by the present invention is a 16-ary Quadrature Amplitude Modulation (16QAM) scheme.

Herein, it will be assumed for illustration purposes that the number $N_t$ of transmission antennas is 4 ($N_t$=4).

Upon receiving input bits $b_1$, $b_2$, $b_3$, $b_4$, ⋯, the multiplexer 301 generates 4 symbols $S_1$, $S_2$, $S_3$ and $S_4$ by processing the input bits $b_1$, $b_2$, $b_3$, $b_4$, ⋯ in units of 8 bits. Each of the generated symbols includes two bits. In other words, symbol $S_1$ represents input bits $b_1$ and $b_2$, symbol $S_2$ represents input bits $b_3$ and $b_4$, symbol $S_3$ represents input bits $b_5$ and $b_6$, and symbol $S_4$ represents input bits $b_7$ and $b_8$. The generated symbols $S_1$, $S_2$, $S_3$ and $S_4$ are input in parallel to the bit/symbol mapper 303, and the bit/symbol mapper 303 generates mapped bit streams $M_1$, $M_2$, $M_3$ and $M_4$, the number of which is equal to the number of its input symbols $S_1$, $S_2$, $S_3$ and $S_4$, by performing mapped-reordering on the bits constituting the symbols $S_1$, $S_2$, $S_3$ and $S_4$. In the bit reordering process, a first mapped bit stream $M_1$ is configured by sequentially ordering the input bits $b_1$ and $b_2$ constituting the first symbol $S_1$ and the input bits $b_5$ and $b_6$ constituting the third symbol $S_3$. A second mapped bit stream $M_2$ is configured by sequentially ordering the input bits $b_3$ and $b_4$ constituting the second symbol $S_2$ and the input bits $b_7$ and $b_8$ constituting the fourth symbol $S_4$. Similarly, a third mapped bit stream $M_3$ is configured by sequentially ordering the input bits $b_5$ and $b_6$ constituting the third symbol $S_3$ and the input bits $b_1$ and $b_2$ constituting the first symbol $S_1$, and a fourth mapped bit stream $M_4$ is configured by sequentially ordering the input bits $b_7$ and $b_8$ constituting the fourth symbol $S_4$ and the input bits $b_3$ and $b_4$ constituting the second

symbol $S_2$. In conclusion, the mapped bit streams $M_1$, $M_2$, $M_3$ and $M_4$ have bit streams of $M_1=b_1b_2b_5b_6$, $M_2=b_3b_4b_7b_8$, $M_3=b_5b_6b_1b_2$, and $M_4=b_7b_8b_3b_4$, respectively. The configured mapped bit streams $M_1$, $M_2$, $M_3$ and $M_4$ are input to the modulator 305, and modulation modules constituting the modulator 305 modulate the mapped bit streams $M_1$, $M_2$, $M_3$ and $M_4$ into transmission symbols $X_1$, $X_2$, $X_3$ and $X_4$ using a 16-ary Quadrature Amplitude Modulation (16QAM) scheme and transmit the transmission symbols $X_1$, $X_2$, $X_3$ and $X_4$ via their associated transmission antennas.

Although each of the mapped bit streams is created herein by sequentially ordering bits constituting two different symbols, the number of bits constituting a symbol, the number of bits copied from a symbol, the number of bits constituting a mapped bit streams, the number of symbols, from each of which bits constituting a mapped bit streams are to be copied, and the ordering sequence of the copied symbols are subject to change according to system environment, and the change causes a change in diversity gain and data rate.

In addition, although 16QAM is used herein as a modulation scheme, the embodiment of the present invention is not limited to this, and can also be applied to various modulation schemes, such as Quadrature Phase Shift Keying (QPSK) or 64QAM.

As can be understood from the foregoing description, the novel data transmission apparatus and method can improve diversity gain while maintaining a data rate available in the conventional spatial multiplexing transmission scheme and can also increase a data rate while maintaining diversity gain available in the conventional spatial diversity transmission scheme, through a simple coding process using bit/symbol mapping.

In addition, the novel data transmission apparatus and method can adjust multiplexing gain and diversity gain according to required system conditions without increasing system implementation complexity, thereby maximizing system performance.

While the invention has been shown and described with reference to a certain preferred embodiment thereof, it will be understood by those skilled in the art that various changes in form and details may be made therein without departing from the scope of the invention as defined by the appended claims.

## Claims

1. A transmitter for a multiple input multiple output, MIMO, communication system, the transmitter comprising:

a multiplexer (301) for multiplexing an input bit stream into a four parallel bit streams (S1, S2, S3, S4), and outputting the four parallel bit streams in parallel as units of two bits;
a bit-order rearranger (303) for reordering two bits included in each of the four parallel bit streams (S1, S2, S3, S4) that are output from the multiplexer in parallel as units of two bits, and for outputting reordered bit streams (M1, M2, M3, M4) including reordered bits,
a first reordered bit stream (M1) of the reordered bit streams (M1, M2, M3, M4) being generated by:

copying two bits (b1, b2) included in a first parallel bit stream (S1) of said four parallel bit streams (S1, S2, S3, S4), copying two bits (b5, b6) included in a third parallel bit stream (S3) of the four parallel plurality of bit streams (S1, S2, S3, S4), sequentially ordering the copied two bits (b1, b2) of the first parallel bit stream (S1) and the copied two bits (b5, b6) of the third parallel bit stream (S3),

a second reordered bit stream (M2) of the reordered bit streams (M1, M2, M3, M4) being generated by:

copying two bits (b3, b4) included in a second parallel bit stream (S2) of the four parallel bit streams (S1, S2, S3, S4), copying two bits (b7, b8) included in a fourth parallel bit stream (S4) of the four parallel bit streams (S1, S2, S3, S4), sequentially ordering the copied two bits (b3, b4) of the second parallel bit stream (S2) and the copied two bits (b7, b8) of the fourth parallel bit stream (S4),

a third reordered bit stream (M3) of the reordered bit streams (M1, M2, M3, M4) being generated by:

copying two bits (b5, b6) included in the third parallel bit stream (S3) of the four parallel bit streams (S1, S2, S3, S4), copying two bits (b1, b2) included in the first parallel bit stream (S1) of the four parallel bit streams (S1, S2, S3, S4), sequentially ordering the copied two bits (b5, b6) of the third parallel bit stream (S3) and the copied two bits (b1, b2) of the first parallel bit stream (S1), and

a fourth reordered bit stream (M4) of the reordered bit streams (M1, M2, M3, M4) being generated by:

copying two bits (b7, b8) included in the fourth parallel bit stream (S4) of the four parallel bit streams (S1, S2, S3, S4), copying two bits (b3, b4) included in the second parallel bit stream (S2) of the four parallel bit streams (S1, S2, S3, S4), sequentially ordering the copied two bits (b7, b8) of the fourth parallel bit stream (S4) and the copied two bits
(b3, b4) of the second parallel bit stream (S2); and

a modulator (305) for modulating the reordered bit streams (M1, M2, M3, M4) output from the bit-order rearranger (303) so as to generate symbols (X1, X2, X3, X4) according to associated modulation schemes, and transmitting the symbols (X1, X2, X3, X4) via associated antennas.

2. The transmitter of claim 1, wherein the modulator (305) comprises modulation modules to respectively modulate the reordered bit streams (M1, M2, M3, M4) to generate the symbols (X1, X2, X3, X4) according to respective 16-ary Quadrature Amplitude Modulation (16QAM) schemes, or respective Quadrature Phase Shift Keying (QPSK) schemes, or respective 64-ary Quadrature Amplitude Modulation (64QAM) schemes, and simultaneously transmit the symbols (X1, X2, X3, X4) via the associated antennas.

3. A transmission method for a multiple input multiple output, MIMO, communication system, the transmission method comprising:

multiplexing, by a multiplexer (301), a serial input bit stream into four parallel bit streams (S1, S2, S3, S4), which are output in parallel as units of two bits;
reordering, by a bit-order rearranger (303), two bits included in each of the four parallel bit streams (S1, S2, S3, S4) that are output from the multiplexer in parallel as units of two bits, and outputting reordered bit streams (M1, M2, M3, M4) including reordered bits,
a first reordered bit stream (M1) of the reordered bit streams (M1, M2, M3, M4) being generated by:

copying two bits (b1, b2) included in a first parallel bit stream (S1) of the four parallel bit streams (S1, S2, S3, S4), copying two bits (b5, b6) included in a third parallel bit stream (S3) of the four parallel bit streams (S1, S2, S3, S4), and sequentially ordering the copied two bits (b1, b2) of the first parallel bit stream (S1) and the copied two bits (b5, b6) of the third parallel bit stream (S3)a second reordered bit stream (M2) of the reordered bit streams (M1, M2, M3, M4) being generated by:

copying two bits (b3, b4) included in a second parallel bit stream (S2) of the four parallel bit streams (S1, S2, S3, S4), copying two bits (b7, b8) included in a fourth parallel bit stream (S4) of the four parallel bit streams (S1, S2, S3, S4), and sequentially ordering the copied two bits (b3, b4) of the second parallel bit stream (S2) and the copied two bits (b7, b8) of the fourth parallel bit stream (S4),

a third reordered bit stream (M3) of the reordered bit streams (M1, M2, M3, M4) being generated by:

copying two bits (b5, b6) included in the third parallel bit stream (S3) of the four parallel bit streams (S1, S2, S3, S4), copying two bits (b1, b2) included in the first parallel bit stream (S1) of the four parallel bit streams (S1, S2, S3, S4), and sequentially ordering the copied two bits (b5, b6) of the third parallel bit stream (S3) and the copied two bits (b1, b2) of the first parallel bit stream (S1), and

a fourth reordered bit stream (M4) of the reordered bit streams (M1, M2, M3, M4) being generated by:

copying two bits (b7, b8) included in the fourth parallel bit stream (S4) of the four parallel bit streams (S1, S2, S3, S4), copying two bits (b3, b4) included in the second parallel bit stream (S2) of the four parallel bit streams (S1, S2, S3, S4), sequentially ordering the copied two bits (b7, b8) of the fourth parallel bit stream (S4) and the copied two bits (b3, b4) of the second parallel bit stream (S2); and
modulating, by a modulator (305), said reordered bit streams (M1, M2, M3, M4) according to associated modulation schemes so as to generate symbols (X1, X2, X3, X4), and simultaneously transmitting the symbols via associated antennas.

4. The transmission method of claim 3, wherein the modulating step comprises respectively modulating the reordered bit streams to generate the symbols according to respective 16-ary Quadrature Amplitude Modulation (16QAM) schemes, or respective Quadrature Phase Shift Keying (QPSK) schemes, or respective 64-ary Quadrature Amplitude Modulation (64QAM) schemes.

**Patentansprüche**

1. Sendevorrichtung für ein MIMO-Kommunikationssystem (Multiple Input Multiple Output communication system), wobei die Sendevorrichtung umfasst:

eine Multiplexiereinrichtung (301), mit der ein Eingangs-Bitstrom in vier parallele Bitströme (S1, S2, S3, S4) multiplexiert wird und die vier parallelen Bitströme parallel als Einheiten von zwei Bits ausgegeben werden; eine Einrichtung (303) zum Umordnen einer Bit-Reihenfolge, mit der zwei Bits umgeordnet werden, die in jedem der vier parallelen Bitströme (S1, S2, S3, S4) enthalten sind, die von der Multiplexiereinrichtung parallel als Einheiten von zwei Bits ausgegeben werden, und
die umgeordneten Bitströme (M1, M2, M3, M4) ausgegeben werden, die umgeordnete Bits enthalten, wobei ein erster umgeordneter Bitstrom (M1) der umgeordneten Bitströme (M1, M2, M3, M4) erzeugt wird, indem:

zwei Bits (b1, b2) kopiert werden, die in einem ersten parallelen Bitstrom (S1) der vier parallelen Bitströme (S1, S2, S3, S4) enthalten sind, zwei Bits (b5, b6) kopiert werden, die in einem dritten parallelen Bitstrom (S3) der vier parallelen Bitströme (S1, S2, S3, S4) enthalten sind, und die kopierten zwei Bits (b1, b2) des ersten parallelen Bitstroms (S1) sowie die kopierten zwei Bits (b5, b6) des dritten parallelen Bitstroms (S3) sequenziell geordnet werden,

ein zweiter umgeordneter Bitstrom (M2) der umgeordneten Bitströme (M1, M2, M3, M4) erzeugt wird, indem:

zwei Bits (b3, b4) kopiert werden, die in einem zweiten parallelen Bitstrom (S2) der vier parallelen Bitströme (S1, S2, S3, S4) enthalten sind, zwei Bits (b7, b8) kopiert werden, die in einem vierten parallelen Bitstrom (S3) der vier parallelen Bitströme (S1, S2, S3, S4) enthalten sind, und die kopierten zwei Bits (b3, b4) des zweiten parallelen Bitstroms (S2) sowie die kopierten zwei Bits (b7, b8) des vierten parallelen Bitstroms (S4) sequenziell geordnet werden,

ein dritter umgeordneter Bitstrom (M3) der umgeordneten Bitströme (M1, M2, M3, M4) erzeugt wird, indem:

zwei Bits (b5, b6) kopiert werden, die in dem dritten parallelen Bitstrom (S3) der vier parallelen Bitströme (S1, S2, S3, S4) enthalten sind, zwei Bits (b1, b2) kopiert werden, die in dem ersten parallelen Bitstrom (S1) der vier parallelen Bitströme (S1, S2, S3, S4) enthalten sind, und die kopierten zwei Bits (b5, b6) des dritten parallelen Bitstroms (S3) sowie die kopierten zwei Bits (b1, b2) des ersten parallelen Bitstroms (S1) sequenziell geordnet werden, und

ein vierter umgeordneter Bitstrom (M4) der umgeordneten Bitströme (M1, M2, M3, M4) erzeugt wird, indem:

zwei Bits (b7, b8) kopiert werden, die in dem vierten parallelen Bitstrom (S4) der vier parallelen Bitströme (S1, S2, S3, S4) enthalten sind, zwei Bits (b3, b4) kopiert werden, die in dem zweiten parallelen Bitstrom (S2) der vier parallelen Bitströme (S1, S2, S3, S4) enthalten sind, und die kopierten zwei Bits (b7, b8) des vierten parallelen Bitstroms (S4) sowie die kopierten zwei Bits (b3, b4) des zweiten parallelen Bitstroms (S2) sequenziell geordnet werden, und

eine Modulationseinrichtung (305), mit der die von der Einrichtung (M1, M2, M3, M4) zum Umordnen einer Bit-Reihenfolge (303) ausgegebenen umgeordneten Bitströme (M1, M2, M3, M4) moduliert werden, um Symbole (X1, X2, X3, X4) entsprechend dazugehöriger Modulationsschemen zu erzeugen, und die Symbole (X1, X2, X3, X4) über dazugehörige Antennen gesendet werden.

2. Sendevorrichtung nach Anspruch 1, wobei die Modulationseinrichtung (305) Modulationsmodule umfasst, die die umgeordneten Bitströme (M1, M2, M3, M4) zum Erzeugen der Symbole (X1, X2, X3, X4) jeweils entsprechender 16 QAM-Schemata (16-aray - Quadrature Amplitude Modulation schemes) oder entsprechender QPSK-Schemata (Quadrature Phase Shift Keying schemes) oder entsprechender 64-QAM Schemata (64-ary-Quadrature Amplitude Modulation schemes) modulieren und die Symbole (X1, X2, X3, X4) simultan über die dazugehörigen Antennen senden.

3. Sendeverfahren für ein MIMO-Kommunikationssystem (Multiple Input Multiple Output communication system), wobei das Sendeverfahren umfasst:

Multiplexieren eines seriellen Eingangs-Bitstroms in vier parallele Bitströmen (S1, S2, S3, S4), die parallel als Einheiten von zwei Bits ausgegeben werden, durch eine Multiplexiereinrichtung (301);
Umordnen von zwei Bits, die in jedem der vier parallelen Bitströme (S1, S2, S3, S4) enthalten sind, die von der Multiplexiereinrichtung parallel als Einheiten von zwei Bits ausgegeben werden, durch eine Einrichtung (303) zum Umordnen einer Bit-Reihenfolge und Ausgeben umgeordneter Bitströme (M1, M2, M3, M4), die umgeordnete Bits enthalten,
wobei ein erster umgeordneter Bitstrom (M1) der umgeordneten Bitströme (M1, M2, M3, M4) erzeugt wird, indem:

zwei Bits (b1, b2) kopiert werden, die in einem ersten parallelen Bitstrom (S1) der vier parallelen Bitströme (S1, S2, S3, S4) enthalten sind, zwei Bits (b5, b6) kopiert werden, die in einem dritten parallelen Bitstrom (S3) der vier parallelen Bitströme (S1, S2, S3, S4) enthalten sind, und die kopierten zwei Bits (b1, b2) des ersten parallelen Bitstroms (S1) sowie die kopierten zwei Bits (b5, b6) des dritten parallelen Bitstroms (S3) sequenziell geordnet werden,

ein zweiter umgeordneter Bitstrom (M2) der umgeordneten Bitströme (M1, M2, M3, M4) erzeugt wird, indem:

zwei Bits (b3, b4) kopiert werden, die in einem zweiten parallelen Bitstrom (S2) der vier parallelen Bitströme (S1, S2, S3, S4) enthalten sind, zwei Bits (b7, b8) kopiert werden, die in einem vierten parallelen Bitstrom (S3) der vier parallelen Bitströme (S1, S2, S3, S4) enthalten sind, und die kopierten zwei Bits (b3, b4) des zweiten parallelen Bitstroms (S2) sowie die kopierten zwei Bits (b7, b8) des vierten parallelen Bitstroms (S4) sequenziell geordnet werden,

ein dritter umgeordneter Bitstrom (M3) der umgeordneten Bitströme (M1, M2, M3, M4) erzeugt wird, indem:

zwei Bits (b5, b6) kopiert werden, die in dem dritten parallelen Bitstrom (S3) der vier parallelen Bitströme (S1, S2, S3, S4) enthalten sind, zwei Bits (b1, b2) kopiert werden, die in dem ersten parallelen Bitstrom (S1) der vier parallelen Bitströme (S1, S2, S3, S4) enthalten sind, und die kopierten zwei Bits (b5, b6) des dritten parallelen Bitstroms (S3) sowie die kopierten zwei Bits (b1, b2) des ersten parallelen Bitstroms (S1) sequenziell geordnet werden, und

ein vierter umgeordneter Bitstrom (M4) der umgeordneten Bitströme (M1, M2, M3, M4) erzeugt wird, indem:
zwei Bits (b7, b8) kopiert werden, die in dem vierten parallelen Bitstrom (S4) der vier parallelen Bitströme (S1, S2, S3, S4) enthalten sind, zwei Bits (b3, b4) kopiert werden, die in dem zweiten parallelen Bitstrom (S2) der vier parallelen Bitströme (S1, S2, S3, S4) enthalten sind, und die kopierten zwei Bits (b7, b8) des vierten parallelen Bitstroms (S4) sowie die kopierten zwei Bits (b3, b4) des zweiten parallelen Bitstroms (S2) sequenziell geordnet werden, und
Modulieren der umgeordneten Bitströme (M1, M2, M3, M4) mit einer Modulationseinrichtung entsprechend dazugehöriger Modulationsschemata, um Symbole (X1, X2, X3, X4) zu erzeugen, und simultanes Senden der Symbole über dazugehörige Antennen.

4. Sendeverfahren nach Anspruch 3, wobei der Modulationsschritt umfasst, dass die umgeordneten Bitströme jeweils moduliert werden, um die Symbole entsprechend jeweiliger 16QAM-Schemata (16-ary Quadrature Amplitude Modulation schemes) oder jeweiliger QPSK-Schemata (Quadrature Phase Shift Keying schemes) oder jeweiliger 65QAM-Schemata (64-ary Quadrature Amplitude Modulation schemes) zu erzeugen.

**Revendications**

1. Émetteur pour un système de communication à entrées multiples et sorties multiples, MIMO, l'émetteur comprenant :

- un multiplexeur (301) pour multiplexer un flux binaire d'entrée en quatre flux binaires parallèles (S1, S2, S3, S4) et délivrer en sortie en parallèle les quatre flux binaires parallèles sous la forme d'unités de deux bits ;

- un ré-arrangeur d'ordre de bits (303), pour réordonner deux bits inclus dans chacun des quatre flux binaires parallèles (S1, S2, S3, S4), qui sont délivrés en sortie du multiplexeur en parallèle sous la forme d'unités de deux bits, et pour délivrer en sortie des flux binaires réordonnés (M1, M2, M3, M4) comprenant des bits réordonnés ;

    - un premier flux binaire réordonné (M1) des flux binaires réordonnés (M1, M2, M3, M4) étant généré en :

        - copiant deux bits (b1, b2) inclus dans un premier flux binaire parallèle (S1) desdits quatre flux binaires parallèles (S1, S2, S3, S4), copiant deux bits (b5, b6) inclus dans un troisième flux binaire parallèle (S3) des quatre pluralités parallèles de flux binaires (S1, S2, S3, S4), ordonnant séquentiellement les deux bits copiés (b1, b2) du premier flux binaire parallèle (S1) et les deux bits copiés (b5, b6) du troisième flux binaire parallèle (S3) ;

    - un deuxième flux binaire réordonné (M2) des flux binaires réordonnés (M1, M2, M3, M4) étant généré en :

        - copiant deux bits (b3, b4) inclus dans un deuxième flux binaire parallèle (S2) des quatre flux binaires parallèles (S1, S2, S3, S4), copiant deux bits (b7, b8) inclus dans un quatrième flux binaire parallèle (S4) des quatre flux binaires parallèles (S1, S2, S3, S4), ordonnant séquentiellement les deux bits copiés (b3, b4) du deuxième flux binaire parallèle (S2) et les deux bits copiés (b7, b8) du quatrième flux binaire parallèle (S4) ;

    - un troisième flux binaire réordonné (M3) des flux binaires réordonnés (M1, M2, M3, M4) étant généré en :

        - copiant deux bits (b5, b6) inclus dans le troisième flux binaire parallèle (S3) des quatre flux binaires parallèles (S1, S2, S3, S4), copiant deux bits (b1, b2) inclus dans le premier flux binaire parallèle (S1) des quatre flux binaires parallèles (S1, S2, S3, S4), ordonnant séquentiellement les deux bits copiés (b5, b6) du troisième flux binaire parallèle (S3) et les deux bits copiés (b1, b2) du premier flux binaire parallèle (S1) ;

    - un quatrième flux binaire réordonné (M4) des flux binaires réordonnés (M1, M2, M3, M4) étant généré en :

        - copiant deux bits (b7, b8) inclus dans le quatrième flux binaire parallèle (S4) des quatre flux binaires parallèles (S1, S2, S3, S4), copiant deux bits (b3, b4) inclus dans le deuxième flux binaire parallèle (S2) des quatre flux binaires parallèles (S1, S2, S3, S4), ordonnant séquentiellement les deux bits copiés (b7, b8) du quatrième flux binaire parallèle (S4) et les deux bits copiés (b3, b4) du deuxième flux binaire parallèle (S2) ; et

- un modulateur (305) pour moduler les flux binaires réordonnés (M1, M2, M3, M4) délivrés en sortie du ré-arrangeur d'ordre de bits (303), de façon à générer des symboles (X1, X2, X3, X4) suivant les procédés de modulation associés, et transmettre les symboles (X1, X2, X3, X4) via des antennes associées.

**2.** Émetteur selon la revendication 1, dans lequel le modulateur (305) comprend des modules de modulation pour respectivement moduler les flux binaires réordonnés (M1, M2, M3, M4) pour générer les symboles (X1, X2, X3, X4) suivant des procédé respectifs de modulation d'amplitude en quadrature 16-quelque chose (16QAM), des procédés respectifs de déplacement de phase en quadrature (QPSK) ou des procédés respectifs de modulation d'amplitude en quadrature 64-quelque chose (64QAM) et transmettre simultanément les symboles (X1, X2, X3, X4) via les antennes associées.

**3.** Procédé de transmission pour un système de communication à entrées multiples et sorties multiples, MIMO, le procédé de transmission comprenant les étapes consistant à :

    - multiplexer, par un multiplexeur (301), un flux binaire d'entrée en série en quatre flux binaires parallèles (S1, S2, S3, S4), qui sont délivré en sortie en parallèle sous la forme d'unités de deux bits ;
    - réordonner, par un ré-arrangeur d'ordre de bits (303), deux bits inclus dans chacun des quatre flux binaires parallèles (S1, S2, S3, S4), qui sont délivrés en sortie du multiplexeur en parallèle sous la forme d'unités de deux bits, et délivrer en sortie des flux binaires réordonnés (M1, M2, M3, M4) comprenant des bits réordonnés ;

    - un premier flux binaire réordonné (M1) des flux binaires réordonnés (M1, M2, M3, M4) étant généré en :

- copiant deux bits (b1, b2) inclus dans un premier flux binaire parallèle (S1) des quatre flux binaires parallèles (S1, S2, S3, S4), copiant deux bits (b5, b6) inclus dans un troisième flux binaire parallèle (S3) des quatre flux binaires parallèles (S1, S2, S3, S4), et en ordonnant séquentiellement les deux bits copiés (b1, b2) du premier flux binaire parallèle (S1) et les deux bits copiés (b5, b6) du troisième flux binaire parallèle (S3) ;

- un deuxième flux binaire réordonné (M2) des flux binaires réordonnés (M1, M2, M3, M4) étant généré en :

- copiant deux bits (b3, b4) inclus dans un deuxième flux binaire parallèle (S2) des quatre flux binaires parallèles (S1, S2, S3, S4), copiant deux bits (b7, b8) inclus dans un quatrième flux binaire parallèle (S4) des quatre flux binaires parallèles (S1, S2, S3, S4), et en ordonnant séquentiellement les deux bits copiés (b3, b4) du deuxième flux binaire parallèle (S2) et les deux bits copiés (b7, b8) du quatrième flux binaire parallèle (S4) ;

- un troisième flux binaire réordonné (M3) des flux binaires réordonnés (M1, M2, M3, M4) étant généré en :

- copiant deux bits (b5, b6) inclus dans le troisième flux binaire parallèle (S3) des quatre flux binaires parallèles (S1, S2, S3, S4), copiant deux bits (b1, b2) inclus dans le premier flux binaire parallèle (S1) des quatre flux binaires parallèles (S1, S2, S3, S4), et en ordonnant séquentiellement les deux bits copiés (b5, b6) du troisième flux binaire parallèle (S3) et les deux bits copiés (b1, b2) du premier flux binaire parallèle (S1) ;

- un quatrième flux binaire réordonné (M4) des flux binaires réordonnés (M1, M2, M3, M4) étant généré en :

- copiant deux bits (b7, b8) inclus dans le quatrième flux binaire parallèle (S4) des quatre flux binaires parallèles (S1, S2, S3, S4), copiant deux bits (b3, b4) inclus dans le deuxième flux binaire parallèle (S2) des quatre flux binaires parallèles (S1, S2, S3, S4), ordonnant séquentiellement les deux bits copiés (b7, b8) du quatrième flux binaire parallèle (S4) et les deux bits copiés (b3, b4) du deuxième flux binaire parallèle (S2) ; et

- moduler, par un modulateur (305), lesdits flux binaires réordonnés (M1, M2, M3, M4) suivant les procédés de modulation associés de façon à générer des symboles (X1, X2, X3, X4), et transmettre simultanément les symboles via des antennes associées.

4. Procédé de transmission selon la revendication 3, dans lequel l'étape de modulation comprend l'étape consistant à moduler respectivement les flux binaires réordonnés pour générer les symboles suivant des procédé respectifs de modulation d'amplitude en quadrature 16-quelque chose (16QAM), des procédés respectifs de déplacement de phase en quadrature (QPSK) ou des procédés respectifs de modulation d'amplitude en quadrature 64-quelque chose (64QAM).

101

103

$S_1 = b_1 b_2$ → QPSK → $X_1$

$S_2 = b_3 b_4$ → QPSK → $X_2$

$b_1 b_2 b_3 b_4 \ldots$ → MUX

$S_3 = b_5 b_6$ → QPSK → $X_3$

$S_4 = b_7 b_8$ → QPSK → $X_4$

FIG.1

EP 1 689 108 B1

$$\begin{bmatrix} X_1 & X_2 & X_5 & X_6 \\ X_2^* & -X_1^* & X_6^* & -X_5^* \\ X_3 & X_4 & X_7 & X_8 \\ X_4^* & -X_3^* & X_8^* & -X_7^* \end{bmatrix}$$

FIG.2

$b_1 b_2 b_3 b_4 \cdots$ → **MUX**

$S_1 = b_1 b_2$  $M_1 = b_1 b_2 b_5 b_6$ → **16QAM** → $X_1$

$S_2 = b_3 b_4$  $M_2 = b_3 b_4 b_7 b_8$ → **16QAM** → $X_2$

$S_3 = b_5 b_6$  $M_3 = b_5 b_6 b_1 b_2$ → **16QAM** → $X_3$

$S_4 = b_7 b_8$  $M_4 = b_7 b_8 b_3 b_4$ → **16QAM** → $X_4$

301          303          305

# FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6510173 B1
- WO 03058905 A
- WO 2005006696 A